Europäisches Patentamt

European Patent Office

Office européen des brevets

(19)

(11) Veröffentlichungsnummer : **0 090 943**
**B1**

(12) **EUROPÄISCHE PATENTSCHRIFT**

(45) Veröffentlichungstag der Patentschrift :
30.12.86

(51) Int. Cl.⁴ : **F 16 N 25/02**

(21) Anmeldenummer : **83101837.9**

(22) Anmeldetag : **25.02.83**

(54) **Progressivverteiler.**

(30) Priorität : 05.04.82 BR 8201989
20.08.82 DE 3230984
20.08.82 DE 3230985

(43) Veröffentlichungstag der Anmeldung :
**12.10.83 Patentblatt 83/41**

(45) Bekanntmachung des Hinweises auf die Patenterteilung : **30.12.86 Patentblatt 86/52**

(84) Benannte Vertragsstaaten :
**CH FR LI NL**

(56) Entgegenhaltungen :
**DE-A- 2 023 774**
**US-A- 3 129 787**
**US-A- 3 409 104**

(73) Patentinhaber : **Eugen Woerner GmbH & Co. KG**
**Zentralschmieranlagen**
**Am Eichamt 8**
**D-6980 Wertheim (DE)**

(72) Erfinder : **Kärcher, Alfred**
**Caixa Postal 18 905**
**BR-01000 Sao Paulo (BR)**

(74) Vertreter : **Schmid, Berthold et al**
**Patentanwälte Dipl.-Ing. B. Schmid Dr. Ing. G. Birn**
**Dipl.-Phys. H. Quarder Falbenhennenstrasse 17**
**D-7000 Stuttgart 1 (DE)**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

## Beschreibung

Die Erfindung bezieht sich auf eine Progressivverteiler-Batterie mit kontinuierlich repetierendem Arbeitszyklus für ein unter Druck zugeführtes flüssiges Medium, insbesondere Schmiermittel, bestehend aus mindestens zwei Progressivverteilern mit wenigstens je drei nacheinander einen Arbeitshub ausführenden, in je einer Zylinderbohrung fliegend gelagerten parallelen Kolben, die durch das Medium verschiebbar sowie zugleich Arbeits- und Steuerkolben sind und die zur Schaffung eines oberen Zylinder-Ringraums und eines unteren Zylinder-Ringraums eine obere Ringnut und eine untere Ringnut aufweisen, wobei jeder Ringnut zwei Gehäusekanäle zugeordnet sind und wobei die Kolben zur Bildung des oberen und unteren Zylinder-Endraums je einen oberen und einen unteren Endzapfen oder dgl. Ansatz aufweisen. Im Falle der Verteilung eines Schmiermittels besteht die Aufgabe eines Progressivverteilers einer derartigen Batterie darin, eine oder mehrere Schmierstellen, beispielsweise den Zahneingriff eines Getriebes zur gegebenen Zeit mit einer vorgegebenen Schmiermittelmenge zu versorgen. Das Medium wird diesem Progressivverteiler unter Druck zugeführt und dieser Druck dient zugleich auch zum Verschieben seiner fliegend gelagerten Kolben. Wenn ein solcher Kolben von seiner einen in andere Endlage verschoben wird, so drückt sein in Verschieberichtung vorderes Ende das davor befindliche Schmiermittel bzw. Medium aus. Demnach bemißt sich also die pro Arbeitshub des Kolbens in die zu einem Verbraucher führende Abgangsleitung geförderte Menge nach dem Kolbenhub und dem Kolbendurchmesser. Die Kolben sind zugleich Arbeits- und Steuerkolben. In der Regel ist es so, daß nach Verschiebung des ersten Kolbens das unter Druck zugeführte Medium zu einem zweiten Kolben strömen und diesen verschieben kann. Der zweite Kolben steuert auf die gleiche Weise den dritten Kolben usw. Wenn der letzte Kolben, ebenso wie die übrigen, seine beispielsweise abwärts gerichtete Kolbenbewegung durchgeführt hat, steuert er in dem Sinne um, daß nunmehr der erste Kolben in Aufwärtsrichtung verschoben und dabei das nun über seinem anderen Kolbenende befindliche Schmiermittel ausgeschoben wird. Demnach sind also derartige Progressiv- oder Kolbenverteiler im Grunde genommen Dosierpumpen. Bei entsprechender Anordnung der Steuerkanäle des Kolbens und des Gehäuses hält sich der Arbeitszyklus so lange selbst aufrecht, solange Schmiermittel unter Druck zugeführt wird. Aus dem Vorstehenden ergibt sich, daß man mit einem Kolben beispielsweise zwei Verbraucher mit dem flüssigen Medium versorgen kann, nämlich bei der Abwärtsbewegung den einen Verbraucher und bei der Aufwärtsbewegung den anderen. Im Falle von drei Kolben können demnach zum Beispiel sechs Verbraucher versorgt werden, es sei denn, man faßt beispielsweise außerhalb des Verteilers zwei oder mehrere Abgangsleitungen einer Kolbenseite zusammen oder verzweigt sie. Hieraus erkennt man, daß es auf den einzelnen Anwendungsfall ankommt, wieviele Kolben ein derartiger Verteiler aufweist.

Weil die verschiedenen Zylinder End- und -Ringräume der einzelnen Kolben, wie bereits angedeutet, so miteinander hydraulisch verbunden sein müssen, daß sich bei andauerndem Zuführungsdruck der Arbeitszyklus ständig selbst aufrechterhält, wird der Progressivverteiler hinsichtlich seiner, meist intern angeordneten, hydraulischen Verbindungen umso komplizierter, je mehr Kolben er umfaßt. Dies führt dazu, daß bei der praktischen Ausführung die Zahl der Kolben nicht beliebig hoch gewählt werden kann. In der Regel weist ein derartiger Progressivverteiler beispielsweise vier bis sechs Kolben auf. Damit ist dann auch zwangsläufig die Zahl der Abgangsbohrungen eines solchen Progressivverteilers festgelegt bzw. aus praktischen Gründen begrenzt. Es gibt nun Anwendungsfälle, insbesondere in der Schmiertechnik, wo sehr viele Stellen mit dem flüssigen Medium bzw. Schmiermittel versorgt werden müssen. Durch eine Verzweigung der Abgangsleitung ist dieses Problem nicht immer zu lösen, insbesondere dann nicht, wenn nur eine bestimmte Menge pro Arbeitshub zur Verfügung steht und mehrere Schmierstellen gleichzeitig dieser oder gar einer größeren Menge bedürfen.

Solche Aufgaben können demnach nur gelöst werden, wenn man mehrere Progressivverteiler verwendet. Jeder muß nun an eine Zuführungsleitungsleitung angeschlossen und montiert werden. Außerdem müssen die verschiedenen Abgangsleitungen verlegt werden. Aufgrund interner hydraulischer Verbindungen vermeidet man bei der vorbekannten Progressivverteiler-Batterie einen Anschluß mehrerer Zuführungsleitungen pro Progressivverteiler. Eine gemeinsame Zuführungsleitung, die einen der Zahl der Progressivverteiler dieser Batterie entsprechende Anzahl von Abzweigungen aufweist, reicht aus.

Bei der eingangs erläuterten Progressivverteiler-Batterie, welche beispielsweise durch die DE-A-2 023 774 bekannt geworden ist, wird es als nachteilig angesehen, daß die Kolben des einen Verteilers dieser aus zwei Verteilern bestehenden Batterie zwei Arbeitszyklen durchführen müssen, während die Kolben des anderen Verteilers einen Arbeitszyklus machen. Infolgedessen ist es nicht möglich, mit dieser Verteiler-Batterie jedem der maximal anzuschließenden Verbraucher nacheinander die gleiche Schmiermittelmenge zukommen zu lassen. Es kommt noch hinzu, daß die Schmiermittelmenge eines Arbeitshubs eines Kolbens des ersten Verteilers zur Steuerung eines Kolbens des zweiten Verteilers benötigt wird und deshalb zum Schmieren eines Verbrauchers gar nicht zur Verfügung steht. Bei einer Verteiler- Batterie mit drei Verteilern würden zwei Arbeitshübe auf diese Weise verloren gehen etc.

Wenn der genannten Steuer-Schmiermittelmenge Luft beigemischt ist -was nicht immer mit Sicherheit vermieden werden kann- so führt der angetriebene Kolben keinen vollständigen Hub aus. Die Folge ist eine Blockierung der gesamten Verteiler-Batterie, d. h. letztere ist gegen Lufteinschlüsse im Schmiermittel sehr empfindlich.

Die Aufgabe der Erfindung wird darin gesehen, eine Progressivverteiler-Batterie der im Oberbegriff des Anspruchs 1 beschriebenen Art so weiterzubilden, daß jeder Arbeitshub jedes Kolbens einen zu Schmierzwecken ausnutzbaren Schmiermittelausstoß bewirkt.

Zur Lösung dieser Aufgabe wird erfindungsgemäß vorgeschlagen, daß die Progressivverteiler-Batterie gemäß dem Oberbegriff des Anspruchs 1 entsprechend dem kennzeichnenden Teil dieses Anspruchs ausgebildet ist. Wenn hier von einem « oberen und unteren Zylinder-Endraum » und einem « oberen und unteren Endzapfen od. dgl. Ansatz » gesprochen wird, so bezieht sich dies auf eine Verwendung dieser Progressivverteiler-Batterie mit stehenden Zylindern bzw. Kolben. Selbstverständlich kann diese Progressivverteiler-Batterie auch liegend oder in anderer Lage verwendet werden, weswegen die Bezugnahme auf « oben » und « unten » nicht einschränkend verstanden werden darf.

Bei dieser Progressivverteiler-Batterie handelt es sich um eine Ausführung, deren Progressivverteiler hydraulisch so verbunden sind, daß bei gleicher Ausgangslage aller Kolben, mit Ausnahme des ersten Kolbens des ersten Verteilers, der erste Kolben des ersten Verteilers den zweiten Kolben des letzten Verteilers und der erste Kolben des letzten Verteilers den zweiten Kolben des vorletzten Verteilers steuert usw., und daß der zweite Kolben jedes Verteilers den dritten und letzterer den vierten etc. Kolben seines Verteilers steuert, wobei der vierte bzw. letzte Kolben des ersten Verteilers mit dem ersten Kolben des ersten Verteilers im Gegensatz zu allen anderen hydraulisch nacheinander betätigbaren Kolben bezüglich der Zylinder-Endräume hydraulisch über Kreuz verbunden ist.

Aus dem Vorstehenden wird klar, daß jeder Progressivverteiler nicht auf drei oder vier Kolben beschränkt ist, sondern auch mehrere Kolben vorhanden sein können, jedoch sind aus den eingangs dargelegten Gründen diesbezüglich Grenzen gesetzt.

Falls eine Progressivverteiler-Batterie lediglich zwei Progressivverteiler umfaßt, so ist der erwähnte « vorletzte Verteiler » zugleich der « erste Verteiler ».

Diese neue Progressivverteiler-Batterie löst die gestellte Aufgabe, weil nunmehr jeder Arbeitshub jedes Kolben zu Schmierzwecken ausgenutzt werden kann. Eine Beimengung von Luft im Schmiermittel oder — allgemeiner gesprochen — im Medium, kann sich jetzt nicht mehr in dem Sinne nachteilig auswirken, daß sich diese Progressivverteiler-Batterie selbst blockiert. Weil kein Arbeitshub eines Kolbens « verloren » geht, läßt sich an diese Progressivverteiler-Batterie eine Maximalzahl von Verbrauchern oder Schmierstellen anschließen. Bei gleichem Kolbendurchmesser und Kolbenhub tritt jeweils die gleiche Schmiermittelmenge aus.

Eine Weiterbildung der Erfindung sieht vor, daß die Zuführungsleitung im Innern des Verteilergehäuses in zwei in Verschieberichtung des zugeordneten Kolbens versetzte Zuführkanäle zur Zylinder-Rohrung mündet, deren mittlerer Abstand dem Abstand der beiden Ringnuten abzüglich des maximalen Kolbenhubs entspricht.

Eine besonders bevorzugte Ausführungsform der Erfindung kennzeichnet sich dadurch, daß jeder Kolben in einer Zylinder-Bohrung einer Zylinder-Büchse gelagert ist, wobei jede Zylinder-Büchse eine erstes Gehäuseteil ihres Verteilers bildet und dichtend in eine ihrem Querschnitt entsprechende kreiszylindrische Aufnahme eines zweiten Gehäuseteils ihres Verteilers eingepreßt, insbesondere eingeschrumpft ist, und daß die geometrischen Achsen der Kolben jeder Zylinder-Büchse die Ecken eines Vielecks markieren oder zumindest teilweise in wenigstens zwei Reihen angeordnet sind. Diese Ausbildung ermöglicht eine besonders preisgünstige Herstellung bei sehr kompakter Bauform. Eine weiterer besonderer Vorteil ergibt sich dadurch, daß sich interne Verbindungskanäle von einen Zylinder-Ringraum zu einem anderen oder zu einem Zylinder-Endraum und umgekehrt in den Bereich der dichtend aneinander anliegenden Flächen von Zylinder-Büchse und Gehäuseteil verlegen lassen. Es ist beispielsweise möglich, in eines dieser Teile, vorteilhafterweise in den Außenmantel der Zylinder-Büchse, Nuten einzuarbeiten, die dann durch die Zylinderfläche des Gehäuses abgedeckt werden und so einen Strömungskanal ergeben. Außerdem lassen sich durch die spezielle Anordnung der Kolben in der Zylinder-Büchse Zuführungs- und Abgangsleitungen in besonders einfacher Weise zusammenfassen.

Eine andere Variante der Erfindung besteht darin, daß sich die Zuführukanäle im zweiten Gehäuseteil befinden und sie mit weiterführenden Kanälen der Zylinder-Büchse ihres Verteilers fluchten, wobei jeder weiterführende Kanal mit allen Zylinderbohrungen der Kolben dieses Verteilers hydraulisch verbunden ist. Dies führt zu kurzen internen Strömungswegen und damit zur Reduzierung des inneren Strömungswiderstands.

Die weiterführenden Kanäle verlaufen in sehr zweckmäßiger Weise in radialer Richtung der Zylinder-Büchse und senkrecht zu den Kolbenachsen und sie schneiden alle Zylinder-Bohrungen etwa tangential an. Diese Strömungswege lassen sich in besonders einfacher Weise erstellen.

Eine weitere Ausgestaltung der Erfindung ist dadurch gekennzeichnet, daß die Zuführungsleitungen aller Verteiler von einer gemeinsamen Leitung abzweigen, die einen Anschluß für eine Speiseleitung aufweist und daß die gemeinsame Leitung durch einen Kanal einer Grundplatte gebildet ist, auf der die zweiten Gehäuseteile aller Verteiler befestigt sind. Die Verteilerbatterie benötigt demnach nur eine einzige Anschlußleitung für das Druckmedium. Die Abzweigungsleitungen der Grundplatte sind bei der vorgesehenen gleichen Ausbildung aller Verteiler letzteren an jeweils gleicher Stelle zuzuordnen, d. h. ihr Abstand entspricht beispielsweise demjenigen benachbarter Mittelebenen zweier Verteiler. Die Verteiler sind mit der Grundplatte selbstverständlich so verbunden, daß Kanäle bzw. Kanalteile korrekt fluchten und die Übergänge von der Grundplatte zu den Verteilern dicht sind.

Eine Weiterbildung der Erfindung besteht darin, daß sich die zweiten Gehäuseteile der Verteiler zwischen einem ersten Endstück und einem zweiten Endstück befinden, die vorzugsweise auch auf der Grundplatte befestigt sind. Die Grundplatte und die Endstücke geben demnach den Platz für die dazwischen befindlichen Verteiler vor. Dies erleichtert nicht nur die Montage sondern später auch die Wartung und gegebenenfalls den Austausch.

Eine andere bevorzugte Ausführungsform der Erfindung ergibt sich aus Anspruchs 9. Hieraus resultieren besonders einfach zu bildende interne Strömungswege, wobei auch die einzelnen Teile der letzteren fertigungsmäßig keine Probleme aufwerfen. Insbesondere ist dadurch aber die Möglichkeit geschaffen, Verteiler-Batterien aus einer beliebigen Anzahl einzelner Verteiler aufzubauen und diese Batterien später zu erweitern oder auch zu verkleinern. Hierzu trägt natürlich auch die erwähnte Ausbildung der Grundplatte bei. Letztere legt selbstverständlich die Größe, zumindest aber die Maximalgröße der Verteilerbatterie fest.

Eine weitere Variante der Erfindung kennzeichnet sich dadurch, daß das zweite Gehäuseteil jedes Verteilers am oberen und unteren Ende an einem Stopfen anliegt, welche die beiden Enden der als Bohrung ausgebildeten Aufnahme des zweiten Gehäuseteils verschließen. Einer dieser Stopfen kann beim Einpressen des zweiten Gehäuseteils als Anschlag dienen. Ansonsten dichten beide Stopfen die Enden jeder Zylinder-Bohrung im zweiten Gehäuseteil ab und zugleich sind sie auch Anschläge für die fliegend gelagerten Kolben.

Jeder Auslaßkanal ist in sehr vorteilhafter Weise mit einem weiterführenden Auslaßkanal der Grundplatte hydraulisch verbunden, an den jeweils eine Abflußleitung zu einem Verbraucher anschließbar ist. Demnach wird also nicht nur die gemeinsame Zuführungsleitung an der Grundplatte angeschlossen, sondern auch jede Abflußleitung von der Verteiler-Batterie zum Verbraucher bzw. zur Schmierstelle. Dies ermöglicht auf einfache Weise ohne Lösen irgend einer Leitung den Austausch der einzelnen Verteiler.

Eine andere Ausbildung der Erfindung ist dadurch gekennzeichnet, daß die hydraulischen Verbindungen zu den Zylinder-Endräumen teilweise durch Längsnuten am Außenmantel der Zylinder-Rüchse gebildet sind und die Längsnuten beidendig in radiale Kanäle übergehen. Längsnuten lassen sich in besonders einfacher Weise erstellen und somit trägt diese Ausbildung zur preiswerten Fertigung der Verteiler und letztlich auch der ganzen Verteiler-Batterie bei.

Wenn man die insbesondere quaderförmigen zweiten Gehäuseteile der Verteiler-Batterie in der geschilderten Weise nebeneinandersetzt und wenn auch die beiden Endstücke auf der Grundplatte montiert sind, so sind alle internen hydraulischen Verbindungen automatisch hergestellt und die Übergänge abgedichtet. Nach Zuführung des Drucks beginnt das Arbeitsspiel automatisch und hält sich dauernd aufrecht. Bei vier Kolben markieren deren Längsachsen die vier Ecken eines Rechtecks bzw. Quadrats. Mehr Kolben, beispielsweise sechs, können in Form eines Sechsecks im zweiten Gehäuse untergebracht werden oder aber in Form zweier Dreierreihen. Soweit es auf das Arbeitsspiel keinen nachteiligen Einfluß hat, können Abflußbohrungen paarweise oder zu mehreren zusammengefaßt werden. Dies kann im Innern der Zylinder-Büchse und/oder in dem letztere umgebenden zweiten Gehäuseteil erfolgen. Im übrigen entsteht eine äußerst kompakte Bauweise allein dadurch, daß die einzelnen Verteiler dieser Verteiler-Batterie unmittelbar nebeneinander stehen bzw. aneinander dichtend anschließen. Auch dies verkürzt die internen Strömungswege. Die erwähnten Nuten zur Erstellung der Strömungskanäle kann man beispielsweise im Feingußprinzip erstellen, so daß jegliche Nacharbeit entfällt.

Die Zylinder-Bohrungen werden gemäß den vorstehenden Ausführungen von einer gemeinsamen Zuflußbohrung in etwa tangentialer Richtung angeschnitten. Wenn im Falle von vier Kolben deren Kolbenachsen ein Quadrat markieren, so ergibt sich aus dem gegenseitigen Abstand der vier Achsen, dem Durchmesser der Kolben sowie dem Betrag, um welchen die Zylinder-Bohrungen angeschnitten werden sollen, der Durchmesser der betreffenden Bohrung. Hieraus erkennt man, daß es durchaus zweckmäßig sein kann, die vier Achsen nicht im Quadrat sondern in Rechteckform anzuordnen, um eine im Durchmesser größere oder auch kleinere, alle vier Zylinder-Bohrungen anschneidende Querbohrung verwenden zu können. Aus demselben Grunde kann es im Falle von drei Kolben vorteilhafter sein, die Ecken nicht in Form eines gleichseitigen sondern eines gleichschenkligen Dreiecks anzuordnen. Deshalb kann auch im Falle von sechs Zylindern die Anordnung von zwei Reihen zu drei Bohrungen zweckmäßiger sein als die Anordnung im Sechseck. Selbstverständlich ist es ohne weiteres auch möglich, jedoch mit etwas größerem Aufwand verbunden, wenn man jede Zylinder-Bohrung jedes Kolbens mit einer separaten Querbohrung hydraulisch anströmbar macht. Im Falle der Zuführung des Mediums ist dies allerdings eine nur in Sonderfällen anzustrebende Lösung, während man im Falle der Medienabführung zweckmäßigerweise jede Zylinderbohrung des Kolbens mit einer eigenen Querbohrung pro Ebene hydraulisch an einen weiterführenden Abströmkanal anschließt.

Weitere Einzelheiten und vorteilhafte Ausbildungen des Erfindungsgegenstands werden nachfolgend anhand der Zeichnung näher erläutert. Es zeigen :

Figur 1  einen senkrecht zur Kolbenachse geführten Schnitt durch einen Progressivverteiler in vereinfachter und teilweise schematischer Darstellung,

Figur 2  ebenfalls schematisch eine Abwicklung des Progressivverteilers, entlang dem durch die geometrischen Achsen der Kolben gelegten Kreis der Fig. 1 (nicht ganz maßstäblich),

Figur 3  einen durch die geometrischen Achsen zweier Kolben gelegten Schnitt durch einen Progressivverteiler des in Fig. 1 gezeigten Typs mit vier Kolben,

Figur 4  eine Ansicht der Fig. 3 in Pfeilrichtung A,

Figur 5  einen Schnitt durch die Zylinderbüchse des Verteilers der Fig. 3 entlang der Linie V-V in vergrößertem Maßstab,

Figur 6  einen ähnlichen Schnitt entlang der Linie VI-VI.

Figur 7  schematisch eine Abwicklung des Progressivverteilers entlang dem durch die geometrischen Achsen der Kolben gelegten Kreis der Fig. 8, wobei mehrere, mindestens aber zwei. Progressivverteiler zu einer Verteilerbatterie hydraulisch und mechanisch verbunden sind,

Figur 8  einen Schnitt. senkrecht zur Kolbenachse durch eine zwei Progressivverteiler umfassende Verteilerbatterie gemäß Fig. 7 in vereinfachter und teilweise schematischer Darstellung.

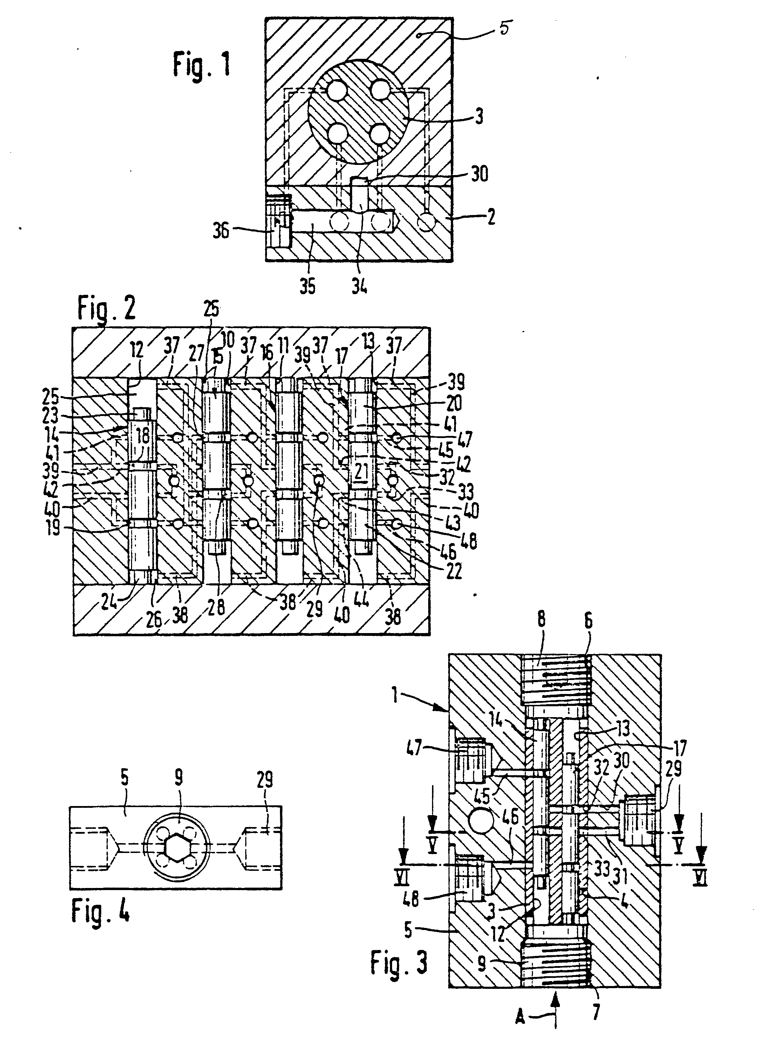

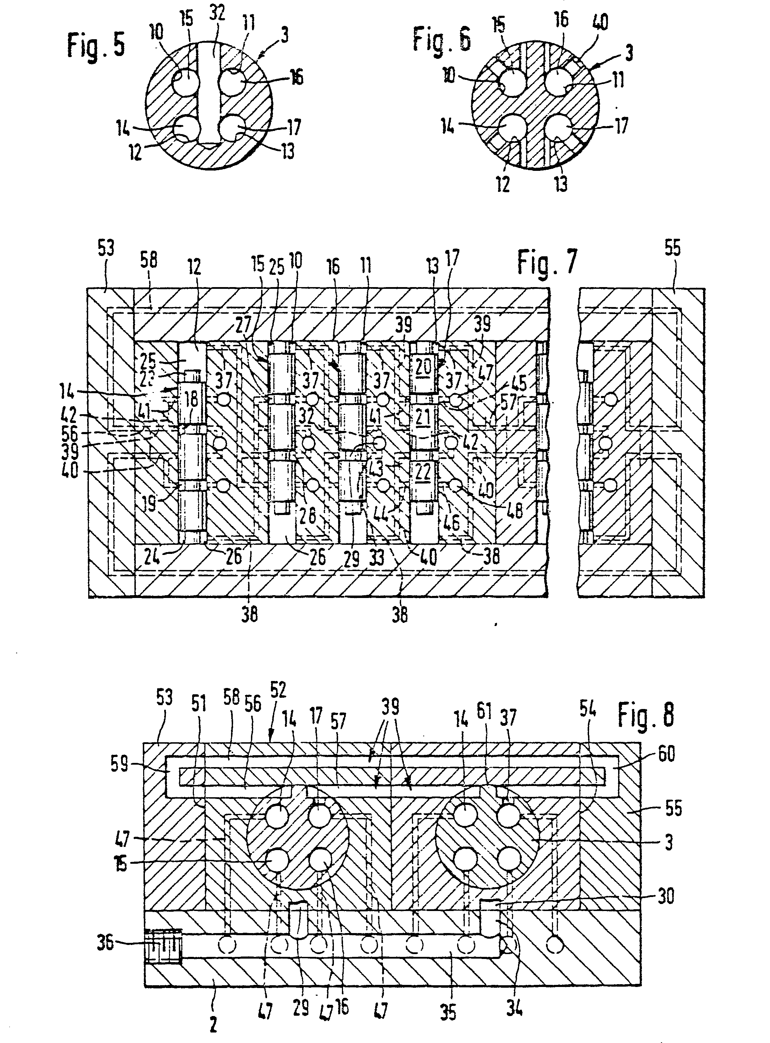

Jeder Progressivverteiler der Verteilerbatterie besitzt ein aus mindestens zwei Teilen bestehendes Gehäuse 1 (Fig. 3). Zwei, drei oder noch mehr in identischer Weise ausgebildete Progressivverteiler der in Frage stehenden Art können zu einer Verteilerbatterie zusammengefaßt werden und man montiert sie zweckmäßigerweise auf eine gemeinsame Grundplatte 2 (Fig. 8). Auf jeden Fall gehören aber zum Gehäuse jedes Progressivverteilers jeweils eine ein erstes Gehäuseteil bildende Zylinderbüchse 3 sowie ein mit einer Aufnahme 4 hierfür ausgestattetes zweites Gehäuseteil 5.

Wenn, wie bei den Ausführungsbeispielen vorgesehen, die Zylinderbüchse einen kreisrunden Querschnitt aufweist, so ist natürlich auch der Querschnitt der Aufnahme 4 kreisförmig. Die Zylinderbüchse 3 ist kürzer als das zweite Gehäuseteil 5, so daß man in ein Gewinde 6 bzw. 7 je einen Gewindestopfen 8 bzw. 9 bündig eindrehen kann, an dem sich das jeweils zugeordnete stirnseitige Ende der Zylinderbüchse 3 abstützt. Dadurch bildet dann das innere Ende jedes Gewindestopfens 8, 9 zugleich auch einen Verschluß für die Zylinderbohrungen 10 bis 13. Die Zylinderbüchse 3 ist in die Aufnahme 4 des zweiten Gehäuseteils 5 vorzugsweise eingeschrumpft. Man erspart sich dadurch spezielle Dichtungen am Übergang von der Zylinderbüchse 3 zum zweiten Gehäuseteil 5, die man im Falle eines nicht dichten Anliegens der Zylinderbüchse an der Aufnahme 4 benötigen würde, weil sonst ein Übertritt des flüssigen Mediums (nachfolgend wird insoweit lediglich noch von « Schmiermittel » gesprochen, ohne daß dies einschränkend sein soll) von einem Kanal oder einer Bohrung zu einem bzw. einer anderen stattfinden würde. Im übrigen ist der Schnitt der Fig. 3 durch die Mitte der Zylinderbüchse 3 gelegt, jedoch sind der Übersichtlichkeit wegen die beiden eingezeichneten Zylinderbohrungen 14 u. 12 mit vollen Linien dargestellt.

Die geometrischen Achsen der vier Kolben 14 bis 17 markieren die Ecken eines Vierecks, insbesondere Quadrats. Sie sind konzentrisch zur geometrischen Achse der Zylinderbüchse 3 angeordnet.

Jeder Kolben besitzt zwei Ringnuten 18 u. 19 die ihn in drei, insbesondere gleich große, Kolbenabschnitte 20, 21 u. 22 unterteilen. Außerdem ist an jedem Kolbenende ein Zapfen 23 bzw. 24 vorgesehen, insbesondere angeformt. Der Zapfendurchmesser entspricht dem Durchmesser des Kolbens im Bereich der Ringnut 18 bzw. 19. Wenn man den Zapfen 23 als den oberen und den Zapfen 24 als den unteren Zapfen bezeichnet, so kann man die zugeordneten Zylinderendräume als oberen Zylinderendraum 25 und unteren Zylinderendraum 26 bezeichnen. Sinngemäß befindet sich dann der Kolben 14 (Fig. 2) in seiner unteren Endstellung, während die übrigen drei Kolben ihre obere Endstellung einnehmen. Die Ringräume zwischen den drei Kolbenabschnitten sind mit 27 und 28 bezeichnet, wobei ersterer der obere und letztere der untere Zylinderringraum ist.

Um an jeder Progressivverteiler lediglich eine das Schmiermittel zuführende Druckleitung anschließen zu müssen und auch eine gemeinsame Zuführungsleitung für die Verteilerbatterie zu ermöglichen, besitzt jeder Verteiler beim Ausführungsbeispiel nur diesen einen Druckmittelanschluß 29. Von ihm gehen in zwei übereinander liegenden Ebenen zwei Radialbohrungen 30 und 31 ab. Ihr gegenseitiger Abstand entspricht dem mittleren Abstand der beiden Zylinderringräume 27 und 28 abzüglich des maximalen Kolbenhubs. Demnach sind die weiterführenden Radialbohrungen 32 und 33 der Zylinderbüchse 3, welche mit den Radialbohrungen 30 und 31 fluchten, in Abhängigkeit von der jeweiligen Kolbenendstellung entweder mit den Zylinderringräumen 27 oder 28 der vier Zylinder verbunden bzw. verbindbar. Den gleichzeitigen Anschluß aller vier Zylinder bzw. der genannten Zylinderringräume der vier Zylinder erreicht man dadurch, daß diese weiterführende Radialbohrung 32 bzw. 33 gemäß Fig. 5 so angebracht ist, daß sie zugleich alle vier Zylinderbohrungen 10 bis 13 anschneidet. Im Falle einer Verteilerbatterie steht das äußere Ende der Radialbohrung 30 und 31 jedes Verteilers zweckmäßigerweise jeweils mit einer weiterführenden Querbohrung 34 fluchtend hydraulisch in Verbindung, die in eine Längsbohrung 35 der Grundplatte 2 einmündet. Die beiden Längsbohrungen 35 münden dann analog der Fig. 8 in einen gemeinsamen Druckmittelanschluß 36. Nan kann die Ausbildung aber auch gemäß Fig. 1 wählen und eine zusammengefaßte Druckmittelbohrung 29 mit der Querbohrung 34 verbinden.

In Fig. 2 und 7 ist der gemeinsame Druckmittelanschluß 29 bzw. eine dementsprechende zusammengefaßte Druckmittelbohrung der Übersichtlichkeit wegen viermal dargestellt und dasselbe gilt auch für die beiden weiterführenden Radialbohrungen 32 und 33 der Zylinderbüchse 3. Beim Verschieben der Kolben wird, wie bereits ausgeführt wurde, aus dem in Verschieberichtung vor dem vorderen Kolbenende befindlichen Zylinderendraum 25 oder 26 das darin befindliche Schmiermittel ausgeschoben. Es fließt zunächst in radialer Richtung nach außen, wobei die entsprechenden Bohrungen in Fig. 2 mit 37 und 38 bezeichnet sind. Daran schließen sich in den Außenmantel der Zylinderbüchse 3 eingearbeitete nutförmige Strömungskanäle 39 und 40, welche zu einem benachbarten Kolben führen, an, die insbesondere in Längs- und Umfangsrichtung verlaufen und mit zwei übereinander liegenden radialen Bohrungen 41 und 42, bzw. 43 und 44, der Zylinderbüchse hydraulisch verbunden sind. Die Radialbohrungen 41 und 42, bzw. 43 und 44, sind so angeordnet, daß jeweils eine davon mit einem Ringraum 27 bzw. 28 des betreffenden Nachbarkolbens korrespondiert, je nachdem in welcher Verschiebelage sich dieser Kolben gerade befindet. In diesen Ringraum mündet noch eine weitere Radialbohrung 45 bzw. 46, die in der Ebene der Radialbohrung 41 bzw. 44 gelegen ist und die zu einem Auslaß 47 bzw. 48 führt, an welchen je eine Abflußleitung zu einem Verbraucher angeschlossen werden kann. In Fig. 8 sind diese hydraulischen Verbindungen schematisch, und in den Fig. 3 und 6 in etwas vereinfachter Form dargestellt. Wenn man den Verteiler nicht einzeln benutzt, wie dies gemäß Fig. 7 möglich ist, sondern mehrere Verteiler zu einer Verteilerbatterie zusammenfaßt, so kann man die Auslaßkanäle 47 und 48 so führen, wie dies Fig. 8 schematisch zeigt. Analog zur Längsbohrung 35 werden dann die Auslaßkanäle 47 und 48 über jeweils eine Längsbohrung der Grundplatte zusammengefaßt und nach außen geführt. Auf diese Weise lassen sich alle Auslaßkanäle 47 aller Verteiler z. B. gruppenweise zusammenfassen und jeweils mit einer gemeinsamen Abgangsleitung zu einem Verbraucher verbinden. Entsprechendes gilt für die Auslaßkanäle 48.

Die oberen Zylinderendräume 25 der Kolben 15, 16 und 17 sind in der geschilderten Weise mit den oberen Zylinderringräumen 27 verbunden. Entsprechendes gilt für die hydraulische Verbindung der unteren Zylinderendräume 26 mit den unteren Zylinderringräumen 28 dieser drei Kolben. Um aber ein sich ständig aufrechterhaltender Arbeitszyklus zu bekommen, ist diesbezüglich zwischen zwei Kolben, beim Ausführungsbeispiel zwischen den Kolben des Verteilers bzw. des Verteilers der Batterie 14 und 15, eine « Überkreuzverbindung »

vorgesehen. Infolgedessen steht der obere Zylinderendraum 25 des Kolbens 14 mit dem unteren Zylinderringraum 28 in hydraulischer Verbindung, während der untere Zylinderendraum 26 des Kolbens 14 mit dem oberen Zylinderringraum 27 des Kolbens 15 hydraulisch verbunden ist.

Ein Arbeitszyklus eines einzelnen Verteilers läuft nun bei vier in ihrer oberen Endlage befindlichen Kolben wie folgt ab. Vom Druckmittelanschluß 29 strömt das Schmiermittel durch den unteren Zylinderringraum 28 des Kolbens 15 über die Strömungskanäle 39 und die Radialbohrung 37 zum oberen Zylinderendraum 25 des Kolbens 14 und verschiebt diesen in seine untere Endstellung. Der nunmehr erreichte Stand der Kolben ist in Fig. 2 und 7 dargestellt. Bei der Abwärtsbewegung drückt der Kolben 14 das in seinem unteren Zylinderendraum 26 befindliche Schmiermittel über die Radialbohrung 38 und den Strömungskanal 40 sowie den oberen Zylinderringraum 27 des Kolbens 15 zum Auslaß 47 des letzteren.

Der obere Zylinderringraum 27 des Kolbens 14 steht nunmehr in hydraulischer Verbindung mit dem Druckmittelanschluß 29 und der an den oberen Zylinderringraum 27 des Kolbens 14 anschließenden Strömungskanäle 39 leiten das Druckmittel zum oberen Zylinderendraum 25 des Kolbens 17, so daß dieser ebenfalls nach unten wandert und das in seinem unteren Zylinderendraum 26 befindliche Schmiermittel über die Strömungskanäle 40 sowie den unteren Zylinderringraum 28 des Kolbens 14 zu dessen Auslaß 48 befördert. Sobald sich der Kolben 17 etwa in seiner unteren Endstellung befindet, ist der Weg für das Schmiermittel zum oberen Zylinderendraum 25 des Kolbens 16 frei, so daß schließlich auch dieser nach unten wandert und das in seinem unteren Zylinderendraum befindliche Schmiermittel ausschiebt. Als letzter wandert nun der Kolben 15 gesteuert vom Kolben 16 nach unten. Aufgrund seiner Über-Kreuz-Verbindung mit dem Kolben 14 gelangt nun das unter Druck stehende Schmiermittel in den unteren Zylinderendraum 26 des Kolbens 14, weswegen dieser nunmehr nach oben wandert und dabei das in seinem oberen Zylinderendraum 25 befindliche Schmiermittel ausschiebt. Über den unteren Zylinderringraum 28 des Kolbens 14 wird nun der Weg für das unter Druck stehende Schmiermittel zum Kolben 17 frei, so daß auch dieser wieder nach oben bewegt wird. Nachfolgend gehen dann auch die Kolben 16 und 15 in dieser Reihenfolge nach oben, wodurch dann der Arbeitszylkus beendet ist. Wenn weiterhin Schmiermittel unter Druck zugeführt wird, so beginnt unmittelbar darauf der nächste Arbeitszyklus.

In Fig. 3 sind etwas schematisiert die beiden Auslässe 47 und 48 für die vom Kolben 17 bei seiner Auf- bzw. Abwärtsbewegung ausgeschobenen Schmiermittelmengen eingezeichnet. Demnach hat dieser Progressivverteiler bei vier Kolben acht Ausgänge, mit denen, wenn man sie weder zusammenfaßt noch verzweigt, acht Schmierstellen geschmiert werden können. Es ist jedoch, wie bereits angedeutet, möglich, gegebenenfalls schon innerhalb des Progressivverteilers solche Auslässe zusammenzufassen und zwar paarweise oder zu vieren, wobei dies in analoger Weise zu Fig. 5 erfolgen kann.

Der vorstehend beschriebene Arbeitszyklus läuft in dieser Weise ab, wenn ein einzelner Verteiler verwendet wird. Es ist dabei allerdings notwendig, daß an die erste Gehäusewand 51 dieses Verteilers 52 ein erstes Endstück 53 und an die dazu parallele zweite Gehäusewand 54 des Verteilers 52 ein zweites Endstück 55 angesetzt ist analog zur Ausbildung der Batterie gemäß Fig. 8. Dabei stellen dann die Kolben 14, 17, 16 und 15 den ersten, zweiten, dritten und vierten Kolben in dieser Reihenfolge dar. Die Überkreuzverbindung ist demnach zwischen dem ersten Kolben 14 und dem vierten Kolben 15 vorgesehen. Die Strömungskanäle 39 und 40 sind zwischen dem zweiten und dritten Kolben sowie zwischen dem dritten und vierten und auch zwischen dem vierten und ersten Kolben jeweils als durchgehender strichpunktierter Linienzug gezeichnet. Bei einem für eine Batteriebildung geeigneten Verteiler besteht nun der Strömungskanal 39 vom ersten Kolben 14 zum zweiten Kolben 17 gemäß Fig. 8 aus einem ersten Verbindungskanal 56, der an der ersten Gehäusewand 51 nach außen mündet, sowie einem zweiten dazu koaxialen Verbindungskanal 57, welcher an der zweiten Gehäusewand mündet und einem zu diesen beiden koaxialen Kanälen parallelen dritten Verbindungskanal 58, der sich von der ersten zur zweiten Gehäusewand erstreckt. Außerdem befindet sich in dem an der ersten Gehäusewand anliegenden ersten Endstück 53 ein erster Umlenkkanal 59 und in dem zweiten Endstück 55 ein zweiter Umlenkkanal 60. Das zweite Endstück liegt bei einer Batterie an der zweiten Gehäusewand 54 des letzten Verteilers an, wenn man davon ausgeht, daß der in Fig. 8 links gelegene Verteiler 52 der erste und der am rechten Ende einer Batterie befindliche Verteiler der letzte Verteiler ist. Infolgedessen stehen also bei einer Batterie sämtliche dritten Verbindungskanäle in unmittelbarer Verlängerung voneinander, während jeweils ein zweiter Verbindungskanal 57 eines Verteilers mit dem ersten Verbindungskanal 56 eines rechts von ihm befindlichen anderen Verteilers in direkter Strömungsverbindung steht.

Dies führt dazu, daß der Arbeitszyklus eines solchen Verteilers in der Weise abläuft, daß zunächst der erste Kolben 14 eines ersten, beim Ausführungsbeispiel links außen angeordneten Verteilers arbeitet und durch diesen gesteuert nunmehr der zweite Kolben 17 des letzten, beim Ausführungsbeispiel dann rechts außen gelegenen Verteilers im gleichen Sinne verschoben wird. Daraufhin arbeitet in der für einen Einzelverteiler geschilderten Weise der dritte Kolben, der vierte Kolben und der erste Kolben des letzten Verteilers. Letzterer steuert dann seinerseits den zweiten Kolben des vorletzten Verteilers an (von rechts nach links gezählt). Auf diese Weise wird dann schließlich auch der zweite Kolben des ersten Verteilers angesteuert. Sobald auch der dritte und der vierte Kolben des ersten Verteilers ihren Arbeitshub durchgeführt haben, beginnt der erste Kolben des ersten Verteilers seinen gegenläufigen Hub und es schließt sich dann die zweite Hälfte des Gesamtarbeitsspiels dieser Batterie an.

Wenn diese Verteiler einzeln verwendet werden sollen, und eine Batteriebildung generell entfällt, so kann man die Zwischenwand 61 an jeweils geeigneter Stelle durchbrechen und dafür auf die Kanäle 56, 57 und 58 sowie die beiden Endstücke 53 und 55 verzichten.

Vorteilhafterweise werden die zweiten Gehäuseteile 5 mit Hilfe von Schrauben, für die entsprechende nicht dargestellte Bohrungen vorhanden sein müssen, oder in zweckmäßiger Weise über Schwalbenschwanzverbindungen oder ähnliche, aus angeformten Gehäuseteilen gebildete Kupplungselemente fest miteinander verbunden. Die aneinander anliegenden Flächen müssen demnach von hoher Oberflächengüte sein und die entsprechenden Seitenflächen jedes zweiten Gehäuseteils 5 müssen genau parallel zueinander verlaufen. Soweit erforderlich, werden am Übergang von einem Gehäuseteil zum benachbarten nicht gezeigte Dichtelemente zwischengeschaltet.

**Patentansprüche**

1. Progressivverteiler-Batterie mit kontinuierlich repetierendem Arbeitszyklus für ein unter Druck zugeführtes flüssiges Medium, insbesondere Schmiermittel, bestehend aus mindestens zwei Progressivverteilern (52) mit wenigstens je drei nacheinander einen Arbeitshub ausführenden, in je einer Zylinderbohrung fliegend gelagerten parallelen Kolben (14 bis 17), die durch das Medium verschiebbar und zugleich Arbeits- und Steuerkolben sind und die zur Schaffung eines oberen Zylinder-Ringsraums (27) und eines unteren Zylinder-Ringraums (28) eine obere Ringnut (18) und eine untere Ringnut (19) aufweisen, wobei jeder Ringnut zwei Gehäusekanäle zugeordnet sind und wobei die Kolben zur Bildung des oberen und unteren Zylinder-Endraums (25, 26) je einen oberen und einen unteren Endzapfen (23, 24) oder dgl. Ansatz aufweisen, dadurch gekennzeichnet, daß bei unterer Endlage des ersten Kolbens (14) des ersten Verteilers (52) und oberer Endlage aller übrigen Kolben (15 bis 17) aller Verteiler, mit Ausnahme der Verbindung des letzten Zylinders (17) des ersten Verteilers (52) mit dem ersten Zylinder dieses Verteilers (52), jeweils die untere Ringnut (19) eines Kolbens mit dem unteren Zylinder-Endraum (28) des im Arbeitszyklus nächstfolgenden Kolbens einerseits und der Zuführungsleitung (29, 34) andererseits verbunden ist, während der obere Zylinder-Endraum (27) mit der oberen Ringnut (18) des zuvor verschobenen Kolbens einerseits und je einem ersten Auslaßkanal (45) andererseits in Verbindung steht, und daß diese hydraulischen Verbindungen zwischen dem letzten Kolben (15) und dem ersten Kolben (14) des ersten Verteilers (52) über Kreuz vertauscht sind, daß außerdem nach einem Arbeitshub aller Kolben, mit Ausnahme der Verbindung des letzten mit dem ersten Zylinder des ersten Verteilers, die untere Ringnut (19) eines Kolbens mit dem unteren Zylinder-Endraum (26) des im Arbeitszyklus nächstfolgenden Kolbens und einem unteren Auslaßkanal (46) sowie die obere Ringnut (18) eines Kolbens mit dem oberen Zylinder-Endraum (25) des im Arbeitszyklus nächstfolgenden Kolbens einerseits und der Zuführungsleitung (29, 34) andererseits hydraulisch verbunden sind, während die hydraulischen Verbindungen zwischen dem letzten Kolben (15) und dem ersten Kolben (14) des ersten Verteilers (52) über Kreuz vertauscht sind.

2. Verteilerbatterie nach Anspruch 1, dadurch gekennzeichnet, daß die Zuführungsleitung (29, 34) im Innern des Verteilergehäuses (1) in zwei in Verschieberichtung des zugeordneten Kolbens versetzte Zuführkanäle (30, 31) zur Zylinderbohrung (10 bis 13) mündet, deren mittlerer Abstand dem Abstand der beiden Ringnuten (18, 19) abzüglich des maximalen Kolbenhubs entspricht.

3. Verteilerbatterie nach Anspruch 1 oder 2, dadurch gekennzeichnet, daß jeder Kolben (14 bis 17) in einer Zylinderbohrung (10 bis 13) einer Zylinderbüchse (3) gelagert ist, wobei jede Zylinderbüchse ein erstes Gehäuseteil ihres Verteilers (52) bildet und dichtend in eine ihrem Querschnitt entsprechende kreiszylindrische Aufnahme (4) eines zweiten Gehäuseteils (5) ihres Verteilers eingepreßt, insbesondere eingeschrumpft ist, und daß die geometrischen Achsen der Kolben (14 bis 17) jeder Zylinderbüchse (3) die Ecken eines Vielecks markieren oder zumindestens teilweise in wenigstens zwei Reihen angeordnet sind.

4. Verteilerbatterie nach Anspruch 3, dadurch gekennzeichnet, daß sich die Zuführkanäle (30, 31) im zweiten Gehäuseteil (5) befinden und sie mit weiterführenden Kanälen (32 bzw. 33) der Zylinderbüchse (3) ihres Verteilers (52) fluchten, wobei jeder weiterführende Kanal mit allen Zylinderbohrungen (10 bis 13) der Kolben (14 bis 17) dieses Verteilers (52) hydraulisch verbunden ist.

5. Verteilerbatterie nach Anspruch 3 oder 4, dadurch gekennzeichnet, daß die weiterführenden Kanäle (32, 33) in radialer Richtung der Zylinderbüchse (3) und senkrecht zu den Kolbenachsen verlaufen, sowie alle Zylinderbohrungen (10 bis 13) etwa tangential anschneidet.

6. Verteilerbatterie nach wenigstens einem der vorhergehenden Ansprüche, dadurch gekennzeichnet, daß die Zuführungsleitungen (29, 34) aller Verteiler (52) von einer gemeinsamen Leitung (35) abzweigen, die einen Anschluß (36) für eine Speiseleitung aufweist.

7. Verteilerbatterie nach Anspruch 6, dadurch gekennzeichnet, daß die gemeinsame Leitung (35) durch einen Kanal einer Grundplatte (2) gebildet ist, auf der die zweiten Gehäuseteile (5) aller Verteiler (52) befestigt sind.

8. Verteilerbatterie nach Anspruch 7, dadurch gekennzeichnet, daß sich die zweiten Gehäuseteile der Verteiler (52) zwischen einem ersten Endstück (53) und einem zweiten Endstück (55) befinden, die vorzugsweise auch auf der Grundplatte (2) befestigt sind.

9. Verteilerbatterie nach Anspruch 8, dadurch gekennzeichnet, daß jedes Endstück (53, 55) einen oberen und unteren Umlenkkanal (59, 60) aufweist, wobei die einen Enden jedes Umlenkkanals über fluchtende Kanäle (58) der zweiten Gehäuseteile (5) der Verteiler (52) hydraulisch miteinander verbunden sind, daß außerdem das andere Ende des oberen Umlenkkanals (58) des ersten Endstücks (53) wechselweise mit der Zuführungsleitung (29, 34) oder dem oberen Auslaß (45) des ersten Kolbens (14) des ersten Verteilers (52) verbunden ist und daß das andere Ende des oberen Umlenkkanals (60) des zweiten Endstücks (55) mit dem oberen Zylinder-Endraum des zweiten Kolbens (17) des letzten Verteilers verbunden ist, wobei die anderen Enden der unteren Umlenkkanäle in analoger Weise hydraulisch verbunden sind.

10. Verteilerbatterie nach wenigstens einem der Ansprüche 3 bis 9, dadurch gekennzeichnet, daß das zweite Gehäuseteil (5) jedes Verteilers (52) am oberen und unteren Ende an einem Stopfen (7 bzw. 8) anliegt, welche die beiden Enden der als Bohrung ausgebildeten Aufnahme (4) des zweiten Gehäuseteils (5) verschließen.

11. Verteilerbatterie nach wenigstens einem der Ansprüche 7 bis 10, dadurch gekennzeichnet, daß jeder Auslaßkanal (45, 46) mit einem weiterführenden Auslaßkanal der Grundplatte (2) hydraulisch verbunden ist, an den jeweils eine Abflußleitung zu einem Verbraucher anschließbar ist.

12. Verteilerbatterie nach wenigstens einem der Ansprüche 3 bis 11, dadurch gekennzeichnet, daß die hydraulischen Verbindungen zu den Zylinder-Endräumen (25, 26) teilweise durch Längsnuten am Außenmantel der Zylinderbüchse (3) gebildet sind und die Längsnuten beidendig in radiale Kanäle übergehen.

**Claims**

1. Progressive distributor battery with a continuously repeating working cycle for a liquid medium, particularly a lubricant, which is supplied under pressure, the battery consisting of at least two progressive distributors (52) each with at least three parallel pistons (14 to 17) which perform a working stroke one after another and which are cantilever mounted in a cylinder bore, being displaceable by the medium and being at the same time working and control pistons and which, to create an upper annular cylinder space (27) and a lower annular cylinder space (28), comprise an upper annular groove (18) and a lower annular groove (19), two housing passages being associated with each annular groove, the pistons having to form the upper and lower cylinder end space (25, 26) in each case one upper and one lower end journal (23, 24) or similar projection, characterised in that in the lower extreme position of the first piston (14) of the first distributor (52) and the upper extreme position of all the other pistons (15 to 17) of all distributors, with the exception of the connection of the last cylinder (17) of the first distributor (52) to the first cylinder of this distributor (52), in each case the lower annular groove (19) of one piston is connected to the lower cylinder end space (28) of whichever piston is the next in the working cycle, on the one hand, and the feed line (29, 34) on the other, while the upper cylinder end space (27) is connected to the upper annular groove (18) of the previously displaced piston on the one hand and with in each case a first outlet passage (45) on the other, and in that these hydraulic connections between the last piston (15) and the first piston (14) of the first distributor (52) are crossed over and in that furthermore after one working stroke of all the pistons, with the exception of the connection of the last to the first cylinder of the first distributor, the lower annular groove (19) of one piston being connected to the lower cylinder end space (26) of whichever piston is the next in the working cycle and a lower outlet passage (46) and also the upper annular groove (18) of one piston is connected to the upper cylinder end space (25) of the next piston in the working cycle on the one hand and the feed line (29, 34) on the other, the connections being hydraulic, while the hydraulic connections between the last piston (15) and the first piston (14) of the first distributor (52) are interchanged crosswise.

2. Distributor battery according to Claim 1, characterised in that the feed line (29, 34) inside the distributor housing (1) discharges into two feed passages (30, 31) to the cylinder bore (10 to 13) which are offset in the direction of displacement of the associated piston, the distance between centres of the feed passages corresponding to the distance between the two annular grooves (18, 19) less the maximum piston travel.

3. Distributor battery according to Claim 1 or 2, characterised in that each piston (14 to 17) is mounted in a cylinder bore (10 to 13) of a cylinder liner (3), each cylinder liner forming a first housing part of its distributor (52) and being pressed in seal-tight fashion into a circularly cylindrical housing (4) in a second housing part (5) of its distributor and corresponding to its cross-section, being in particular shrunk into place, and in that the geometrical axes of the pistons (14 to 17) of each cylinder liner (3) mark the corners of a polygon or are disposed at least partly in at least two rows.

4. Distributor battery according to Claim 3, characterised in that the feed passages (30, 31) are disposed in the second housing part (5) and are aligned with onwards leading passages (32, 33) of the cylinder liner (3) of their distributor (52), each farther-extending passage being hydraulically connected to all cylinder bores (10 to 13) of the pistons (14 to 17) of this distributor (52).

5. Distributor battery according to Claim 3 or 4, characterised in that the farther-extending passages (32, 33) extend in a radial direction of the cylinder liner (3) and at a right-angle to the piston axes, and intersect all cylinder bores (10 to 13) substantially tangentially.

6. Distributor battery according to at least one of the preceding Claims, characterised in that the feed lines (29, 34) of all distributors (52) branch from a common line (35) which has a connection (36) for a feed line.

7. Distributor battery according to Claim 6, characterised in that the common line (35) is constituted by a passage in a baseplate (2) on which are mounted the second housing parts (5) of all distributors (52).

8. Distributor battery according to Claim 7, characterised in that the second housing parts of the distributors (52) are disposed between a first end piece (53) and a second end piece (55) which are preferably also mounted on the baseplate (2).

9. Distributor battery according to Claim 8, characterised in that each end piece (53, 55) has an upper and a lower deflecting passage (59, 60), the one end of each deflecting passage being hydraulically connected through aligned passages (58) in the second housing parts (55) of the distributors (52) and in that furthermore the other end of the upper deflecting passage (58) of the first end piece (53) is alternately connected to the feed line (29, 34) or the upper outlet (45) of the first piston (14) of the first distributor (52) and in that the other end of the upper deflecting passage (60) of the second end piece (55) is connected to the upper cylinder end space of the second piston (17) of the last distributor, the other ends of the lower deflecting passages being hydraulically connected in similar manner.

10. Distributor battery according to at least one of Claims 3 to 9, characterised in that the second housing part (5) of each distributor (52) bears at the upper and lower end on a plug (7 or 8) which plugs occlude the two ends of the housing (4) in the second housing part (5) which is constructed as a bore.

11. Distributor battery according to at least one of Claims 7 to 10, characterised in that each outlet passage (45, 46) is hydraulically connected to a further extending outlet passage of the baseplate (2) to which it is possible to connect in each case a discharge line to a consumer unit.

12. Distributor battery according to at least one of Claims 3 to 11, characterised in that. the hydraulic connections to the cylinder end spaces (25, 26) are partially formed by longitudinal grooves on the outer shell of the cylinder liner (3), the longitudinal grooves merging at both ends into radial passages.

**Revendications**

1. Batterie de distributeurs progressifs à cycle de travail se répétant de façon continue, pour un milieu liquide amené sous pression, en particulier un lubrifiant, formé d'au moins deux distributeurs progressifs munis chacun d'au moins trois pistons parallèles (14 à 17) montés en porte-à-faux chacun dans un alésage de cylindre, exécutant l'un après l'autre une course de travail, qui peuvent coulisser sous l'action du milieu et sont à la fois des pistons de travail et de commande et qui, pour créer une chambre annulaire supérieure de cylindre (27) et une chambre annulaire inférieure de cylindre (28), présentent une gorge annulaire supérieure (18) et une gorge annulaire inférieure (19), deux canaux de corps étant adjoints à chaque gorge annulaire et les pistons présentant chacun, pour former les chambres terminales supérieure et inférieure de cylindre (25, 26), un tenon terminal supérieur et un tenon terminal inférieur (23, 24) ou appendice similaire, caractérisée en ce que lorsque le premier piston (14) du premier distributeur (52) est dans la position extrême inférieure et que tous les autres pistons (15 à 17) de tous les distributeurs sont dans la position extrême supérieure, à l'exception de la liaison du dernier cylindre (17) du premier distributeur (52) avec le premier cylindre de ce distributeur (52), la gorge annulaire inférieure (19) d'un piston est chaque fois reliée, d'une part, à la chambre terminale inférieure de cylindre (28) du piston qui suit immédiatement dans le cycle de travail et, d'autre part, au tuyau d'amenée (29, 34), tandis que la chambre terminale supérieure de cylindre (27) est en liaison, d'une part, avec la gorge annulaire supérieure (18) du piston qui a coulissé précédemment et, d'autre part, chaque fois avec un premier canal d'échappement (45), et en ce que ces liaisons hydrauliques entre le dernier piston (15) et le premier piston (14) du premier distributeur (52) sont interverties de façon croisée, en ce qu'en outre, après une course de travail de tous les pistons, à l'exception de la liaison du dernier avec le premier cylindre du premier distributeur, la gorge annulaire inférieure (19) d'un piston est reliée hydrauliquement avec la chambre terminale inférieure de cylindre (26) du piston qui suit immédiatement dans le cycle de travail et à un canal d'échappement inférieur (46), et la gorge annulaire supérieure (18) d'un piston avec la chambre terminale supérieure du cylindre (25) du piston qui suit immédiatement dans le cycle de travail, d'une part, et avec le tuyau d'amenée (29, 34), d'autre part, tandis que les liaisons hydrauliques entre le dernier piston (15) et le premier piston (14) du premier distributeur sont interverties de façon croisée.

2. Batterie de distributeurs selon la revendication 1, caractérisée en ce que le tuyau d'amenée (29, 34) débouche vers l'alésage de cylindre (10 à 13), à l'intérieur du corps de distributeur (1), dans deux canaux d'amenée (30, 31) décalés dans la direction de coulissement du piston adjoint et dont l'espacement moyen correspond à l'espacement des deux gorges annulaires (18, 19) moins la course maximale des pistons.

3. Batterie de distributeurs selon l'une des revendications 1 et 2, caractérisée en ce que chaque piston (14 à 17) est monté dans un alésage de cylindre (10 à 13) d'une chemise de cylindre (3), chaque chemise de cylindre formant une première partie de corps de son distributeur (52) et étant enfoncée de façon étanche, en particulier frettée, dans un logement cylindrique circulaire (4) d'une deuxième partie de corps (5) de son distributeur, logement qui correspond à sa section, et en ce que les axes géométriques des pistons (14 à 17) de chaque chemise de cylindre (3) marquent les angles d'un polygone, ou sont disposés au moins partiellement en au moins deux rangées.

4. Batterie de distributeurs selon la revendication 3, caractérisée en ce que les canaux d'amenée (30, 31) se trouvent dans la deuxième partie de corps (5) et s'alignent sur des canaux de prolongement (32, 33) de la chemise de cylindre (3) de leur distributeur (52), chaque canal de prolongement étant relié hydrauliquement à tous les alésages de cylindre (10 à 13) des pistons (14 à 17) de ce distributeur (52).

5. Batterie de distributeurs selon l'une des revendications 3 et 4, caractérisée en ce que les canaux de prolongement (32, 33) sont situés dans la direction radiale de la chemise de cylindre (3) et perpendiculairement aux axes de piston et coupent à peu près tangentiellement tous les alésages de cylindre (10 à 13).

6. Batterie de distributeurs selon au moins une des revendications précédentes, caractérisée en ce que les tuyaux d'amenée (29, 34) de tous les distributeurs (52) se détachent d'un tuyau commun (35) qui présente un raccordement (36) pour un tuyau d'alimentation.

7. Batterie de distributeurs selon la revendication 6, caractérisée en ce que le tuyau commun (35) est formé par un canal d'une plaque de base (2) sur laquelle sont fixées les deuxièmes parties de corps (5) de tous les distributeurs (52).

8. Batterie de distributeurs selon la revendication 7, caractérisée en ce que les deuxièmes parties de corps des distributeurs (52) se trouvent entre une première pièce terminale (53) et une deuxième pièce terminale (55) qui sont, de préférence, fixées aussi sur la plaque de base (2).

9. Batterie de distributeurs selon la revendication 8, caractérisée en ce que chaque pièce terminale (52, 55) présente un canal de déviation supérieur et un canal de déviation inférieur (59, 60), les unes des extrémités de chaque canal de déviation étant reliées hydrauliquement entre elles par l'intermédiaire de canaux alignés (58) des deuxièmes parties de corps (5) des distributeurs (52), en ce qu'en outre l'autre extrémité du canal de déviation supérieur (58) de la première pièce terminale (53) est alternativement reliée au tuyau d'amenée (29, 34) ou à la sortie supérieure (45) du premier piston (14) du premier distributeur (52), et en ce que l'autre extrémité du canal de déviation supérieur (60) de la deuxième pièce terminale (55) est reliée à la chambre terminale supérieure de cylindre du deuxième piston (17) du dernier distributeur, les autres extrémités des canaux de déviation inférieurs étant reliées hydrauliquement de façon analogue.

10. Batterie de distributeurs selon au moins une des revendications 3 à 9, caractérisé en ce que la deuxième partie de distributeur (5) de chaque distributeur (52) est appliquée à l'extrémité supérieure et à l'extrémité inférieure contre un bouchon respectif (7, 8), ces bouchons fermant les deux extrémités du logement (4) de la deuxième partie de corps (5), conçu sous forme d'alésage.

11. Batterie de distributeurs selon au moins une des revendications 7 à 10, caractérisée en ce que chaque canal de sortie (45, 46) est relié hydrauliquement à un canal de sortie de prolongement de la plaque de base (2), auquel peut chaque fois être raccordé un tuyau d'écoulement menant à un consommateur.

12. Batterie de distributeurs selon au moins une des revendications 3 à 11, caractérisée en ce que les liaisons hydrauliques avec les chambres terminales de cylindre (25, 26) sont formées partiellement par des rainures longitudinales de la paroi latérale extérieure de la chemise de cylindre (3), et en ce que les rainures longitudinales rejoignent aux deux extrémités des canaux radiaux.

Fig. 1

Fig. 2

Fig. 4

Fig. 3

Fig. 5

Fig. 6

Fig. 7

Fig. 8